# EUROPÄISCHE PATENTSCHRIFT

(11) **EP 2 652 347 B1**
(45) Veröffentlichungstag und Bekanntmachung des Hinweises auf die Patenterteilung: **08.07.2015**
(21) Anmeldenummer: 11724122.4
(22) Anmeldetag: 18.05.2011
(51) Int. Cl.: F16C 27/04, F16C 35/077, H02K 7/00, H02K 7/14

(54) **ELEKTRISCHE MASCHINE, INSBESONDERE EINES PUMPENAGGREGATES**
ELECTRIC MACHINE, IN PARTICULAR OF A PUMP UNIT
MACHINE ÉLECTRIQUE, EN PARTICULIER APPARTENANT À UN GROUPE POMPE

(30) Priorität: 16.12.2010 DE 102010054800; 29.01.2011 DE 102011009714
(43) Veröffentlichungstag der Anmeldung: 23.10.2013
(73) Patentinhaber: Baumüller Nürnberg GmbH, 90482 Nürnberg (DE)
(72) Erfinder: GUTJAHR, Frank, 92268 Etzelwang (DE); LEMKE, Peter, 91126 Schwabach (DE)
(74) Vertreter: FDST Patentanwälte
(86) Internationale Anmeldenummer: PCT/EP2011/002459
(87) Internationale Veröffentlichungsnummer: WO 2012/079654

(56) Entgegenhaltungen:
- WO-A1-2009/075671
- DE-A1- 2 309 351
- DE-A1- 19 818 634
- US-A- 5 235 227

## Beschreibung

Die Erfindung betrifft eine elektrische Maschine gemäß dem Oberbegriff des Anspruchs 1. Eine derartige elektrische Maschine ist beispielsweise aus der DE 23 09 351 A1 bekannt. Unter elektrische Maschine wird hierbei insbesondere ein Elektromotor verstanden, der als Kraftmaschine eines Pumpenaggregates mit einer Arbeitsmaschine, beispielsweise einer Hydraulikpumpe (Servopumpe), koppelbar ist.

Eine derartige elektrische Maschine weist üblicherweise zwei die Wellenenden der den Rotor (Anker) tragenden Motorwelle drehbeweglich abstützende Lager auf, die vom das Maschinengehäuse stirnseitig abdeckenden Lagerschilden aufgenommen sind. Dabei ist das als A-Lager (A-Lagerschild) bezeichnete abtriebsseitige Lager in der Regel ein Festlager, während das gegenüberliegende Rotorbzw. Ankerlager häufig als Schiebesitz ausgeführt ist, um Wärmedehnungen des Rotors (Ankers) ausgleichen zu können. Die Anordnung des Festlagers und des Schiebesitzes kann auch umgekehrt sein.

In Verbindung mit einer Arbeitsmaschine, beispielsweise einer Pumpe zum Fördern von Hydraulikflüssigkeit, ist die dann auch als Kraftmaschine bezeichnete elektrische Maschine mit der Arbeitsmaschine (Pumpe) häufig über eine drehende Welle mechanisch verbunden. Die Kopplung der Motorwelle der Kraftmaschine mit der Welle (Pumpenwelle) der Arbeitsmaschine kann über ein Getriebe oder über eine Kupplung erfolgen. Derartige Wellenkupplungen sorgen im Betrieb eines derartigen Aggregates für den notwendigen Ausgleich von Fertigungs- und/oder Montagetoleranzen sowie zum Ausgleich unterschiedlicher thermischer Längenausdehnungen des Rotors und des Stators der elektrischen Maschine, um entsprechende Wegdifferenzen aufzunehmen.

Der Einsatz einer derartigen, häufig verschleißbehaftete Elemente beinhaltenden Kupplung bei servobetriebenen Hydraulikpumpen (Hydroaggregat) erfordert jedoch zusätzlichen Bauraum und reduziert zudem die Drehsteifigkeit der Wellenanbindung. Dies führt insbesondere bei einem mit einer beispielsweise umrichtergesteuerten Druckregelung servobetriebenen Hydraulikpumpe vornehmlich bei hochdynamischen Anwendungen, die eine breitbandige Drehmomentregelung benötigen, zu einer signifikanten Verschlechterung der Bandbreite des eingesetzten Regelkreises.

Der Erfindung liegt die Aufgabe zugrunde, eine elektrische Maschine anzugeben, die insbesondere hinsichtlich der Wellenlagerung verbessert und in einfacher sowie zuverlässiger Art und Weise mit einer Arbeitsmaschine, insbesondere einer Hydraulikpumpe, koppelbar ist.

Diese Aufgabe wird erfindungsgemäß gelöst durch die Merkmale des Anspruchs 1. Vorteilhafte Ausgestaltungen, Weiterbildungen und Varianten sind Gegenstand der Unteransprüche.

Hierzu weist die elektrische Maschine eine radial elastisch und axial verschiebbar innerhalb des B-seitigen Lagerschildes oder einer dortigen Lagernabe angeordnete Lagereinheit mit einer Kugellageranordnung auf. Hierzu ist die Kugellageranordnung innerhalb der Lagernabe geeigneterweise von einer Hülse oder Buchse umgeben, die ihrerseits auf einem elastomeren Element, insbesondere einem O-Ring, geringfügig axial verschiebbar radial aufliegt.

Die Kugellageranordnung weist vorteilhafterweise zwei Rillenkugellager auf, die infolge des elastomeren Elementes radial elastisch und axial verschiebbar von einer auch standardmäßigen Lagernabe der elektrischen Maschine (Elektromotor) aufgenommen ist. Zur Verhinderung des Gleitens der Wälzkörper der Kugellager ist die einfach und kostengünstig aufgebaute Lagereinheit als in sich vorgespanntes Modul ausgeführt.

Die Erfindung geht dabei von der Überlegung aus, dass ein kompakter Aufbau eines Elektromotors als Kraftmaschine und einer Antriebsmaschine, beispielsweise in Form einer Hydraulikpumpe, erreicht werden kann, wenn der Elektromotor ohne eigenes A-Lager mittels einer starren Wellenverbindung, d.h. einer starren Wellenankopplung oder einer durchgehenden Welle an die anzutreibende Arbeitsmaschine montiert wird, die ihrerseits über eine die Maschinenwelle axial und radial festlegende Eigenlagerung verfügt. Um dies zu ermöglichen, ist erkanntermaßen eine Überbestimmtheit der Motorlagerung zu vermeiden. Dies kann dadurch erreicht werden, dass die B-seitige Lagerung der A-seitig lagerlosen Motorwelle radial elastisch und axial zumindest geringfügig verschiebbar ausgeführt ist.

Eine solche radiale und geringfügig axiale Verschiebbarkeit eines Loslagers kann zur Vermeidung des Klemmens sowie zur Dämpfung in aus der DE 198 18 634 A1 an sich bekannter Weise mittels einer Hülse realisiert werden, die einerseits eine Kugellageranordnung aufnimmt und andererseits über ein elastisches Element außenseitig radial abgestützt ist. Die Hülse mit den eingesetzten Kugellagern wird in eine auch standardmäßige B-seitige Lagernabe eingeschoben und liegt im Montagezustand dort auf dem am Außenumfang der Hülse vorgesehenen elastischen Element auf.

Die Vorspannung innerhalb der Lagereinheit erfolgt geeigneterweise mittels einer Ausgleichsscheibe in Form vorzugsweise einer Wellfeder, mit der die Rillenkugellager axial gegeneinander verspannt sind. Hierdurch ist auch ohne eine äußere Belastung auf die Motorwelle die erforderliche Mindestbelastung der Kugellager sichergestellt und ein Gleiten der Wälzkörper der Kugellager vermieden, so dass ein Versagen dieser Wälzlager sicher verhindert ist.

Geeigneterweise weist die Lagereinheit zwischen den Innenringen der beiden Rillenkugellager eine Passscheibe als Abstandshalter auf. Zudem ist zweckmäßigerweise ein äußerer Sicherungsring vorgesehen, der den Lageraußenring des diesem äußeren Sicherungsring benachbarten Kugellagers der Lagereinheit in Axialposition hält. Dieser äußere Sicherungsring ist zweckmäßigerweise mit dessen Außenkante in eine innenwandseitig in die Lagerhülse oder -buchse eingebrachte Ringnut eingesetzt.

Ein zusätzlich vorgesehener innerer Sicherungsring, der vorzugsweise wiederum auf derjenigen Lagerseite angeordnet ist, an der auch die

Wellfeder und der äußere Sicherungsring vorgesehen sind, stellt eine axiale Fixierung des benachbarten Lagerinnenrings der Kugellageranordnung sicher. Der innere Sicherungsring liegt mit dessen Außenkante in einer in den lagerseitigen Wellenschaft der Motorwelle umfangsseitig eingebrachten Ringnut ein.

Zur Montage eines Antriebsaggregates mit der elektrischen Maschine als Kraftmaschine und mit einer Arbeitsmaschine wird zunächst der Rotor der Kraftmaschine mit einer auf deren Motorwelle aufgesetzten Schrumpfscheibe auf das zugewandte Wellenende der Maschinenwelle der Arbeitsmaschine aufgesetzt und an einen Montageanschlag geführt wird, wobei anschließend die Schrumpfscheibe verspannt und das Wellendende der Motorwelle mit dem Wellenende der Maschinenwelle drehfest verbunden wird, und wobei danach das den Stator enthaltende Maschinengehäuse auf den Rotor aufgeschoben und an einem Flansch der Arbeitsmaschine befestigt wird. Der Anschlag wird vorteilhafterweise hergestellt mittels einer am Flansch der Arbeitsmaschine abnehmbar angelegten bzw. angeschlagenen Abstands- oder Anlageschablone.

Die mit der Erfindung erzielten Vorteile bestehen insbesondere darin, dass eine statische radiale und statisch oder thermisch bedingte axiale Toleranzen ausgleichende Lagerung oder Lagereinheit in Form eines in sich verspannten Moduls bereit gestellt ist, das anstelle eines herkömmlichen Kugellagers in die Lagernabe eines bereits vorhandenen Standardlagerschildes eingebracht werden kann. Hierdurch ist einerseits kein Sonderlagerschild erforderlich, was eine aufwendungsarme Maschinen- bzw. Motorlagerung ermöglicht. Andererseits umfasst die erfindungsgemäß weitergebildete Lagereinheit nur eine einfache rotationssymmetrische Lagerhülse und ansonsten lediglich kostengünstige Norm- und Standartbauteile. Zudem beschränkt sich die Montage der Lagereinheit in die Lagernabe auf ein einfaches Einschieben des Lagermoduls.

Des Weiteren ist eine Verdrehsicherung der Lagereinheit in bzw. gegenüber der Lagernabe allein durch Reibschluss mittels des elastomeren Element (O-Ring) hergestellt, so dass das elastomere Element (O-Ring) eine Doppelfunktion erfüllt, nämlich einerseits die radiale Elastizität der Lagereinheit und andererseits deren Verdrehsicherung. Dadurch ist kein zusätzlicher Formschluss der Hülse mit der Lagernabe erforderlich, um ein Mitdrehen der Hülse bzw. der Lagereinheit zu verhindern. Zudem wirkt das Elastomer bzw. der O-Ring lediglich als Lagerstütze und dient nicht zur Aufnahme von Kräften.

Die erfindungsgemäße elektrische Maschine ermöglicht die Bereitstellung eines vergleichsweise kostensparenden Aggregates mit einer starren Wellenanbindung oder auch einer durchgehenden Welle zwischen der als Kraftmaschine dienenden elektrischen Maschine (Elektromotor) und der Antriebsmaschine in Form beispielsweise einer Hydraulikpumpe, wobei der Elektromotor kein A-Lager aufweist. Der bei einer solchen geeigneterweise starren Wellenkupplung in Form einer durchgehenden einteiligen Welle oder einer Wellenanbindung mittels der Schrumpfscheibe lediglich erforderliche statische Toleranzausgleich wird aufgrund der erfindungsgemäß ausgebildeten Lagereinheit nicht im drehenden Bezugssystem der Welle mittels eines dann erforderlichen dynamischen Toleranzausgleichs in Form einer aufwändigen Wellenkupplung realisiert. Vielmehr gewährleistet die erfindungsgemäße radial elastische und axial verschiebliche B-seitige Lagerung der Kraftmaschine den Toleranzausgleich ebenfalls statisch.

Die erfindungsgemäße Maschine eignet sich insbesondere für Servopumpen und solche Anwendungen, bei denen der direkte Anbau eines Elektromotors an eine anzutreibende eigengelagerte Antriebsmaschine von Vorteil ist. Die elektrische Maschine kann jedoch auch ein Generator oder als solcher betrieben sein.

In Kombination mit einer integrierten starren Wellenkupplung, die durch einen radialen Zugang betätigbar ist, und einer aufgrund der modularen Gestaltung der Lagereinheit im Anschluss an die Montage des Elektromotors geeignet lösbaren A-seitigen Transportsicherung kann die elektrische Maschine bzw. der Elektromotor nach Art eines Bausatzes aufgebaut sein. Dies ermöglicht die Anwendung auch bei einem schnell drehenden schlanken Elektromotor. Zudem kann ein Anbau des Motors an eine eine geeignete Eigenlagerung der Eintriebswelle aufweisende Maschine auch kundenseitig erfolgen.

Nachfolgend werden Ausführungsbeispiele der Erfindung anhand einer Zeichnung näher erläutert. Darin zeigen:
- Fig. 1: in einem Teillängsschnitt ein Pumpenaggregat mit einem Elektromotor mit einer A-seitig lagerlosen und B-seitig wälzgelagerten Motorwelle,
- Fig. 2: in einem vergrößerten Ausschnitt II aus Fig. 1 die B-seitige Lagereinheit mit zwei Rillenkugellagern innerhalb einer Lagerhülse, und
- Fig. 3: das Pumpenaggregat gemäß Fig. 1 mit einer Anschlagschablone und einer Wellenschrumpfscheibe zur Wellenkopplung der Motorwelle mit einer Pumpenwelle.

Einander entsprechende Teile sind in allen Figuren mit den gleichen Bezugszeichen versehen.

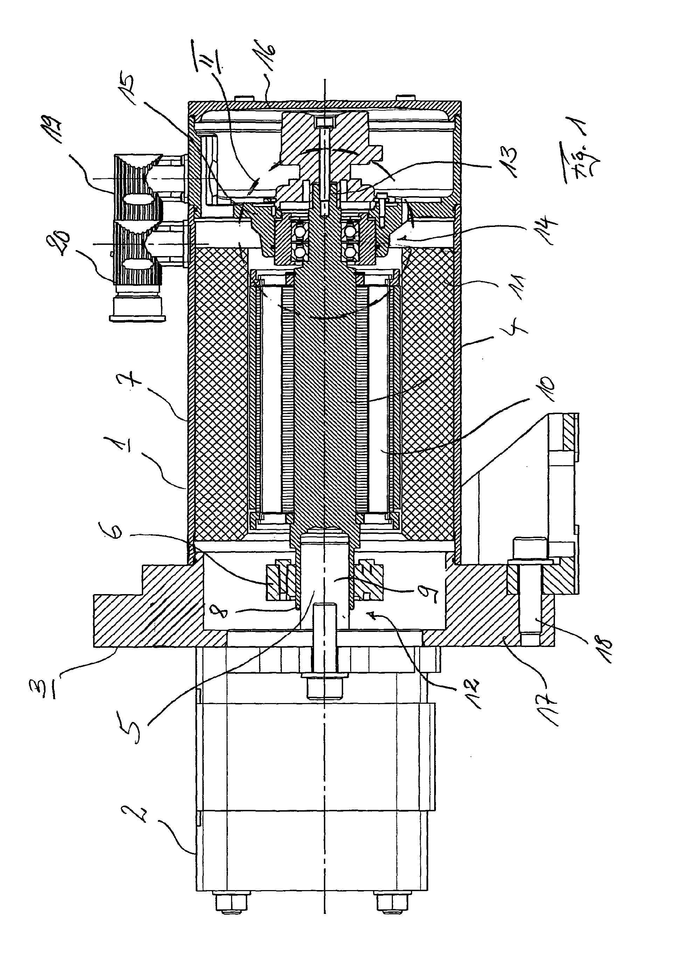

Fig. 1 zeigt im Längsschnitt einen Elektromotor 1, der mit einer Pumpe 2, beispielsweise einer Hydraulikpumpe, zu einem Pumpenaggregat 3 gekoppelt ist. Innerhalb des Pumpenaggregates 3 bildet der Elektromotor 1 die elektrische Kraftmaschine, während die Hydraulikpumpe 2 die Antriebsmaschine ist. Die Motorwelle 4 des Elektromotors 1 und die Maschinenwelle 5 der Pumpe 2 sind mittels einer Spann- oder Schrumpfscheibe 6 starr miteinander verbunden. Hierzu übergreift das A-seitig aus einem nachfolgend als Motorgehäuse bezeichneten Maschinengehäuse 7 herausgeführte Wellenende 8 der Motorwelle 4 das diesem zugewandte Wellenende 9 der Maschinenwelle 5 der anzukoppelnden Pumpe 2. Nach erfolgter Verschraubung der Schrumpfscheibe 6 sind die Wellenenden 8, 9 verdrehsicher und spielfrei miteinander verspannt.

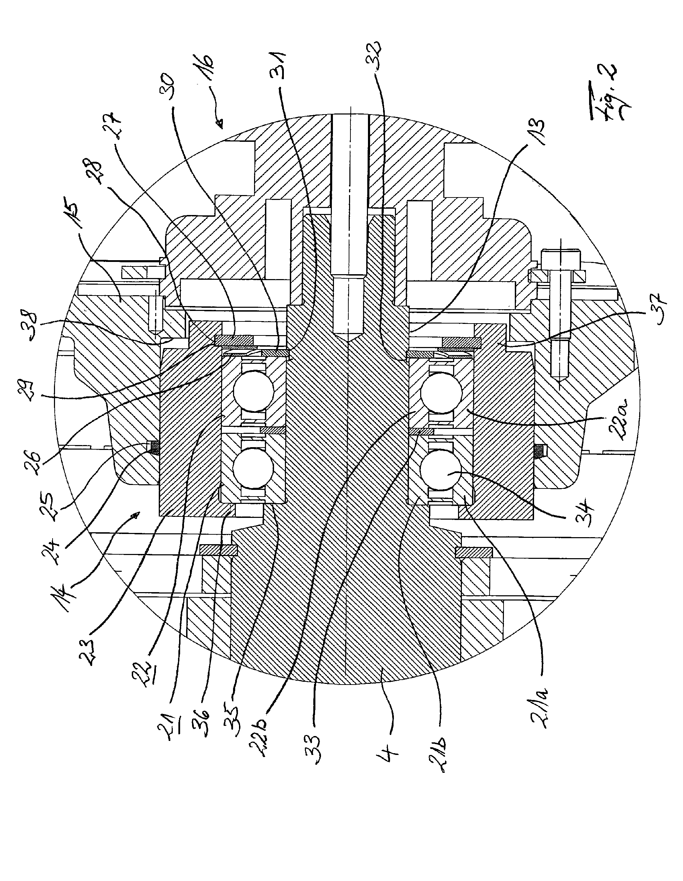

Die aus dem Motorgehäuse 7 herausgeführte Motorwelle 4 des abtriebsseitig (A-seitig) lagerlosen Elektromotors 1 trägt einen Rotor (Läufer oder Anker) 10, dem innerhalb des Motorgehäuses 7 ein gehäusefester Stator 11 unter Spaltbildung gegenüberliegt. Innerhalb des Motorgehäuses 7 ist das B-seitige Wellenende (Wellenschaft) 13 der Motorwelle 4, welches der durch die starre Verbindung der Wellenenden 8, 9 gebildeten Koppelstelle 12 gegenüberliegt, in einer Lagereinheit 14 gelagert. Die in Fig. 2 vergrößert dargestellte Lagereinheit 14 ist in eine Lagernabe 15 eines B-seitigen Lagerschildes 16 eingesetzt.

Das Motorgehäuse 7 ist im Bereich der Koppelstelle 12 an einen Pumpenflansch 17 der Pumpe 2 mittels Flanschschrauben 18 angebunden. Über die Koppelstelle 12 ist der Elektromotor 1 ohne eignes A-Lager über die starre Kopplung der Wellenenden 8, 9 mit der angetriebenen Pumpe 2 verbunden, die in nicht näher dargestellter Art und Weise selbst eine vollständige Eigenlagerung aufweist, so dass die Position der Motorwelle 4 axial und radial festgelegt ist.

Das Motorgehäuse 7 überragende Signal- und Leistungseinbaudosen 19 bzw. 20 dienen zum Anschluss des elektromotorisch angetriebenen Pumpenaggregates 3 an beispielsweise einen (nicht dargestellten) Frequenzumrichter zur drehmomentund/oder drehzahlgeregelten Steuerung des Elektromotors 1. Nach Art einer Servopumpe wird hierbei der Volumenstrom des von der Pumpe 2 beispielsweise geförderten Hydrauliköls über die Motordrehzahl des Elektromotors 1 eingestellt und geregelt, während die Einstellung des Drucks des geförderten Fluids über eine Drehmomentregelung des Elektromotors 1 erfolgt.

Wie aus Fig. 2 vergleichsweise deutlich ersichtlich ist, umfasst die B-seitige Lagereinheit 14 des Elektromotors 1 zwei nebeneinander angeordnete Rillenkugellager 21, 22, die innerhalb eines Hülse (Lagerhülse oder -buchse) 23 angeordnet sind. Die Lagereinheit 14 umfasst des Weiteren ein elastomeres Element in Form eines O-Ringes 24, der am Außenumfang der Lagerhülse 23 diese umschließend angeordnet ist und in einer Ringnut 25 einliegt. Die Ringnut 25 ist im Ausführungsbeispiel am Innenumfang der Lagernabe 15 in diese eingebracht. Alternativ kann die Ringnut 25 jedoch auch in die Lagerhülse 23 eingebracht sein.

Die Passungsverhältnisse sind derart gewählt, dass mittels des O-Rings 24 ein gewisser radialer Toleranzausgleich ermöglicht ist. Die Lagerhülse 23 ist hierbei derart in die Lagernabe 15 bzw. in das B-Lagerschild 16 eingebracht, dass auch in axialer Richtung eine gewisse Verschiebbarkeit der Lagerhülse 23 in beide Axialrichtungen gewährleistet ist. Ein Mitdrehen der Lagerhülse 23 der im Wesentlichen unbelasteten Lagereinheit 14 in der Lagernabe 15 wird infolge der Reibung zwischen der Lagerhülse 23, dem O-Ring 24 und der Lagernabe 15 verhindert.

Die beiden Rillenkugellager 21, 22 sind mittels einer Ausgleichsscheibe in Form einer Wellfeder 26 gegeneinander verspannt. Die Ausgleichsscheibe 26 greift am Außenring 22a des dem B-seitigen Lagerschild 16 zugewandten äußeren Rillenkugellagers 22 an. Auf der diesem äußeren Rillenkugellager 22 abgewandten Seite der Ausgleichsscheibe 26 ist ein äußerer Sicherungsring 27 vorgesehen, der mit dessen Außenkante 28 in eine Ringnut 29 am Innenumfang der Lagerhülse 23 einsitzt. Der äußere Sicherungsring 27 dient zur axialen Fixierung des nächstliegenden Lageraußenrings 22a des äußeren Rillenkugellagers 22.

Ein ebenfalls im Bereich der Ausgleichsscheibe bzw. der Wellfeder 26 vorgesehener innerer Sicherungsring 30 dient zur axialen Fixierung des benachbarten Lagerinnenrings 22b des äußeren Rillenkugellagers 22 und sitzt mit dessen Außenkante 31 in einer umfangsseitig in die Motorwelle 4 wellenendseitig eingebrachten Ringnut 32 ein. Zwischen den beiden Lagerinnenringen 21 b und 22b der beiden Rillenkugellager 21 bzw. 22 sitzt eine Passscheibe 33 auf dem Wellenende bzw. dem Wellenschaft 13 der Motorwelle 4.

Die zueinander beweglichen und durch Wälzkörper 34 getrennten Innenringe 21 b, 22b und Außenringe 21 a, 22a der beiden Rillenkugellager 21 bzw. 22 stützen sich auf der lagerlosen A-Seite des Elektromotors 1 einerseits an einer aufragenden Stütz- oder Anlageschulter 35 des Wellenendes bzw. -schaftes 13 der Motorwelle 4 und andererseits an einem Stütz- oder Anlagekragen 36 der Lagerhülse 23 ab. Auf der dem Stützkragen 36 gegenüberliegenden Seite ist die als Buchse ausgeführte Lagerhülse 23 einseitig mit einem Innenbund 37 versehen, mit dem die Lagerhülse 23 in einer entsprechenden Schulterkontur 38 der Lagernabe 15 einsitzt. Die Ausgestaltung der Lagereinheit 14 mit der Lagerhülse 23 und den beiden darin angeordneten Rillenkugellagern 21, 22 sowie dem hülsenaußenseitigen O-Ring 24 ist von der Lagernabe 15 radial elastisch und axial zumindest geringfügig verschiebbar aufgenommen. Mit dieser mittels der als Ausgleichsscheibe dienenden Wellfeder 26 vorgespannten Lagereinheit 14 zur Verhinderung des Gleitens der Wälzkörper 34 ist eine Überbestimmtheit der Motorlagerung des mit der Pumpe 2 über eine starre Wellenanbindung gekoppelten Elektromotors 1 vermieden. Die vorgespannte Lagereinheit 14 stützt B-seitig das Wellenende 13, d. h. den Wellenschaft der Motorwelle 4 und damit den Rotor oder Läufers 10 des Elektromotors 1 ab. Die Konstruktion und der Aufbau der erfindungsgemäßen Lagereinheit 14 ermöglicht deren Aufnahme in eine Standard-Lagernabe 15 eines standardmäßigen B-Lagerschildes 16.

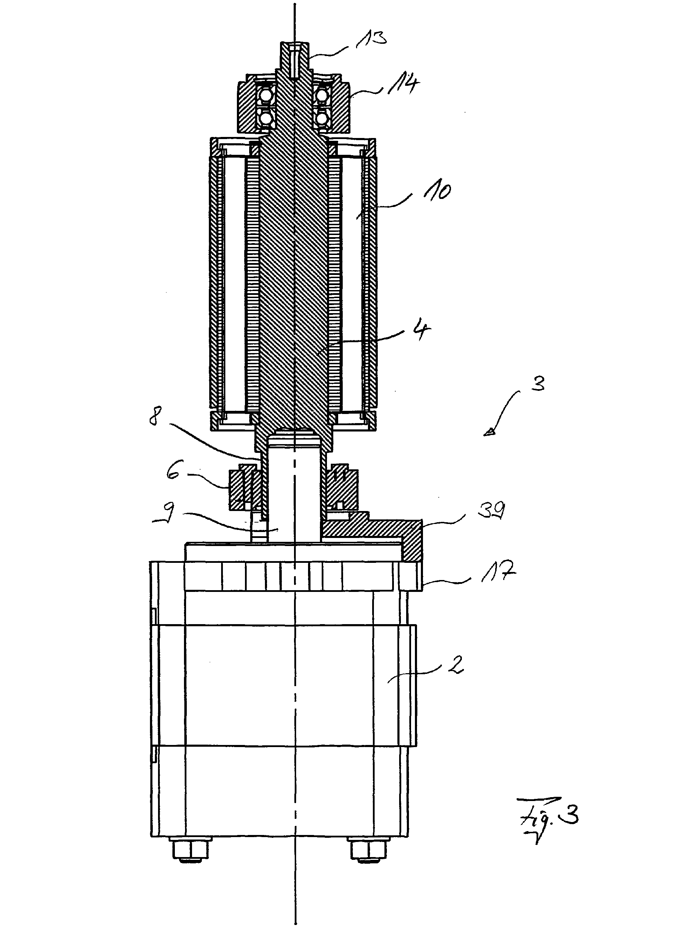

Fig. 3 zeigt das Pumpenaggregat 3 mit auf das Wellenende 9 der Maschinenwelle 5 der Pumpe 2 aufgesetztem Rotor 10 des Elektromotors 1 in einem ersten Montageschritt 1. Hierbei trägt das Wellenende 8 der Motorwelle 4 des Elektromotors 1 bereits die Spann- bzw. Schrumpfscheibe 6. In diesem Montageschritt ist eine Anlageschablone 39 auf den Flansch 17 der Pumpe 2 an- oder aufgesetzt. Bei angelegter Schablone 39 wird der Rotor 10, der auf der Motorwelle 4 mit daran am B-seitigen Wellenschaft 13 montierter Lagereinheit 14 sitzt, auf das Wellenende 9 der Maschinenwelle 5 der Pumpe 2 bis zum Anschlag an der Schablone 39 aufgeschoben. In diesem Zustand ist die Motorwelle 4 axial exakt zum Pumpenflansch 17 positioniert. Anschließend werden die Schrumpfscheibe 39 durch Verschraubung verspannt und somit die Wellenenden 8 und 9 starr miteinander gekoppelt.

Im nächsten Montageschritt wird die Schablone 39 entfernt. Anschließend wird das Motorgehäuse 7 inklusive des Stators 11 über den Rotor 10 aufgeschoben und am Pumpenflansch 17 durch Verschraubung befestigt. Dabei wird die Lagereinheit 14 von der Lagernabe 15, in deren Ringnut 25 der O-Ring 24 bereits eingelegt ist, aufgenommen.

Zusammenfassend wird zur Montage eines Antriebsaggregates 3 mit einer erfindungsgemäßen elektrischen Maschine 1 als Kraftmaschine und einer Arbeitsmaschine 2, insbesondere einer Hydraulikpumpe, wird zunächst der Rotor 10 der Kraftmaschine 1 mit einer, insbesondere in einem Vormontageschritt, auf die Motorwelle 4 aufgesetzten Schrumpfscheibe 6 auf das zugewandte Wellenende 9 der Maschinenwelle 5 der Arbeitsmaschine 2 aufgesetzt und an einen Montageanschlag 39 geführt. Anschließend wird die Schrumpfscheibe 6 verspannt und dabei die Motorwelle 4 mit dem Wellenende 9 der Maschinenwelle 5 drehfest verbunden. Daraufhin wird das den Stator 11 enthaltende Maschinengehäuse 7 auf den Rotor 10 aufgeschoben und am Flansch 17 der Arbeitsmaschine 2 befestigt.

**Bezugszeichenliste**

| | | | |
|---|---|---|---|
| 1 | Elektromotor | 21b | Innenring |
| 2 | Pumpe | 22a | Außenring |
| 3 | Pumpenaggregat | 22b | Innenring |
| 4 | Motorwelle | 23 | Lagerhülse/-buchse |
| 5 | Maschinenwelle | 24 | O-Ring |
| 6 | Spann-/Schrumpfscheibe | 25 | Ringnut |
| 7 | Maschinen-/Motorgehäuse | 26 | Ausgleichsscheibe/Wellfeder |
| 8,9 | Wellenende | 27 | äußerer Sicherungsring |
| 10 | Rotor/Läufer | 28 | Außenkante |
| 11 | Stator | 29 | Ringnut |
| 12 | Koppelstelle | 30 | innerer Sicherungsring |
| 13 | Wellenende/-schaft | 31 | Außenkante |
| 14 | Lagereinheit | 32 | Ringnut |
| 15 | Lagernabe | 33 | Passscheibe |
| 16 | B-Lagerschild | 34 | Wälzkörper |
| 17 | Pumpenflansch | 35 | Stütz-/Anlageschulter |
| 18 | Flanschschraube | 36 | Stütz-/Anlagekragen |
| 19 | Signaleinbaudose | 37 | Innenbund |
| 20 | Leistungseinbaudose | 38 | Schulterkontur |
| 21,22 | Rillenkugellager | 39 | Anlageschablone |
| 21a | Außenring | | |

## Patentansprüche

1. Elektrische Maschine (1) mit in einem Maschinengehäuse (7) einem Stator (11) und einem Rotor (10), der auf einer B-seitig abgestützten Motorwelle (4) angeordnet ist, wobei eine axial verschieblich innerhalb des Maschinengehäuses (7) angeordnete B-seitige Lagereinheit (14) mit einer Kugellageranordnung (21,22) vorgesehen ist,
**dadurch gekennzeichnet,**
- **dass** die Lagereinheit (14) eine die Kugellageranordnung (21,22) umschließende Hülse (23) und ein elastomeres Element (24) aufweist, auf dem die Hülse (23) radial elastisch und in Axialrichtung verschiebbar aufliegt,
- **dass** die Motorwelle (4) A-seitig lagerlos aus dem Maschinengehäuse (7) herausgeführt und an eine Koppelstelle (12) geführt ist, an der eine Schrumpfscheibe (9) zur starren Kopplung der Motorwelle (4) mit einer Maschinenwelle (5) einer Arbeitsmaschine (2) vorgesehen ist, und
- **dass** die Lagereinheit (14) zur axialen Fixierung des benachbarten Lagerinnenrings (22b) der Kugellageranordnung (21,22) einen inneren Sicherungsring (30) aufweist, der mit dessen Ringaußenkante (31) in einer im lagerseitigen Wellenschaft (13) der Motorwelle (4) umfangsseitig vorgesehenen Ringnut (32) einsitzt.

2. Elektrische Maschine (1) nach Anspruch 1,
**dadurch gekennzeichnet,**
**dass** das elastomere Element (24), insbesondere ein O-Ring, von einer Ringnut (25) aufgenommen ist, die außenseitig in die Hülse (23) oder in eine Lagernabe (15) eingebracht ist, die die Lagereinheit (14) aufnimmt.

3. Elektrische Maschine (1) nach Anspruch 1 oder 2,
**dadurch gekennzeichnet,**
**dass** das elastomere Element (24) derart von einer Ringnut (25) aufgenommen und außenseitig in die Hülse (23) oder in eine Lagernabe (15) eingebracht ist, dass die Hülse (23) zumindest geringfügig axial verschiebbar und verdrehsicher in einer Lagernabe (15) gehalten ist.

4. Elektrische Maschine (1) nach einem der Ansprüche 1 bis 3,
**dadurch gekennzeichnet,**
**dass** die Kugellageranordnung (21,22) zwei mittels einer wellfederartigen Ausgleichsscheibe (26) gegeneinander verspannte Rillenkugellager umfasst.

5. Elektrische Maschine (1) nach Anspruch 4,
**dadurch gekennzeichnet,**
**dass** die Lagereinheit (14) eine zwischen den Innenringen (21 b, 22b) der Rillenkugellager (21,22) angeordnete Passscheibe (33) aufweist.

6. Elektrische Maschine (1) nach einem der Ansprüche 1 bis 5,
**dadurch gekennzeichnet,**
**dass** die Lagereinheit (14) einen äußeren Sicherungsring (27) zur axialen Fixierung des benachbarten Lageraußenrings (22a) der Kugellageranordnung (21,22) aufweist.

7. Elektrische Maschine (1) nach Anspruch 6,
**dadurch gekennzeichnet,**
**dass** der äußere Sicherungsring (27) mit dessen Scheibenaußenkante (28) in einer in der Hülse (23) innenseitig vorgesehenen Ringnut (29) einsitzt.

8. Antriebsaggregat (3) mit einer elektrischen Maschine (1) nach einem der Ansprüche 1 bis 7 als Kraftmaschine, und mit einer Arbeitsmaschine (2), insbesondere einer eine Eigenlagerung aufweisenden Pumpe, vorzugsweise einer Hydraulikpumpe.

## Claims

1. Electrical machine (1) having a stator (11) and a rotor (10) in a machine housing (7), said rotor being arranged on a motor shaft (4) supported on the B side, wherein a B-side bearing unit (14) arranged axially displaceably within the machine housing (7) is provided with a ball bearing arrangement (21, 22),
**characterised in that**,
- the bearing unit (14) has a sleeve (23) enclosing the ball bearing arrangement (21, 22) and an elastomer element (24), on which the sleeve (23) is supported to be displaceable with radial elasticity and in the axial direction,
- the motor shaft (4) is guided on the A side out of the machine housing (7) without a bearing and is guided to a coupling point (12) at which a shrink disc (6) is provided for the fixed coupling of the motor shaft (4) with an engine shaft (5) of a work machine (2), and
- the bearing unit (14) has an inner securing ring (30) for the axial fixing of the adjacent bearing inner ring (22b) of the ball bearing arrangement (21, 22), said securing ring lying with its ring outer edge (31) in an annular groove (32) provided peripherally in the bearing-side shaft (13) of the motor shaft (4).

2. Electrical machine (1) according to claim 1,
**characterised in that**,
the elastomer element (24), in particular an O ring, is received by an annular groove (25) which is introduced externally into the sleeve (23) or into a bearing hub (15) that receives the bearing unit (14).

3. Electrical machine (1) according to claim 1 or 2,
**characterised in that**,
the elastomer element (24) is received by an annular groove (25) and introduced externally into the sleeve (23) or into a bearing hub (15) in such a way that the sleeve (23) is at least slightly axially displaceable and is held in a bearing hub (15) so as not to twist.

4. Electrical machine (1) according to one of claims 1 to 3,
**characterised in that**,
the ball bearing arrangement (21, 22) comprises two deep groove ball bearings that are braced against each other by means of an ondular compensation disc (26).

5. Electrical machine (1) according to claim 4,
**characterised in that**,
the bearing unit (14) has an adjusting washer (33) arranged between the inner rings (21b, 22b) of the deep groove ball bearings (21, 22).

6. Electrical machine (1) according to one of claims 1 to 5,
**characterised in that**,
the bearing unit (14) has an outer securing ring (27) for the axial fixing of the adjacent bearing outer ring (22a) of the ball bearing arrangement (21, 22).

7. Electrical machine (1) according to claim 6,
**characterised in that**,
the outer securing ring (27) lies with its disc outer edge (28) in an annular groove (29) provided internally in the sleeve (23).

8. Drive assembly (3) having an electrical machine (1) according to one of claims 1 to 7 as a power machine, and having a machine (2), in particular a pump having an integral bearing, preferably an hydraulic pump.

## Revendications

1. Machine électrique (1) comprenant, dans un carter de machine (7), un stator (11) et un rotor (10), qui est agencé sur un arbre de moteur (4) supporté du côté B ou côté N (no driving side), une unité de palier (14) côté B ou N avec un agencement de roulements à billes (21, 22), étant prévue et agencée de manière axialement coulissante à l'intérieur du carter de machine (7),
**caractérisée**
- **en ce que** l'unité de palier (14) comprend un fourreau (23) entourant l'agencement de roulements à billes (21, 22), et un élément en élastomère (24), sur lequel s'appuie le fourreau (23) de manière radialement élastique et en coulissement dans la direction axiale,
- **en ce que** du côté A ou D (driving side), l'arbre de moteur (4) est mené sans palier hors du carter de machine (7), et amené à une zone de couplage (12) au niveau de laquelle est prévue une bague de serrage (6) pour assurer le couplage rigide de l'arbre de moteur (4) avec un arbre de machine (5) d'une machine de travail (2), et
- **en ce que** l'unité de palier (14) comprend un anneau d'arrêt intérieur (30), qui est destiné à la fixation axiale de la bague intérieure de roulement voisine (22b), de l'agencement de roulements à billes (21, 22), et qui est logé, avec sa bordure extérieure d'anneau (31), dans une rainure annulaire (32) prévue dans un embout d'arbre (13) de l'arbre de moteur (4), côté palier.

2. Machine électrique (1) selon la revendication 1,
**caractérisée**
**en ce que** l'élément en élastomère (24), notamment un joint torique, est logé dans une rainure annulaire (25) réalisée du côté extérieur dans le fourreau (23) ou dans un moyeu de palier (15), qui accueille l'unité de palier (14).

3. Machine électrique (1) selon la revendication 1 ou la revendication 2,
**caractérisée**
**en ce que** l'élément en élastomère (24) est logé dans une rainure annulaire (25) et engagé du côté extérieur dans le fourreau (23) ou dans un moyeu de palier (15), de manière à ce que le fourreau (23) soit maintenu dans le moyeu de palier (15) en pouvant y coulisser axialement au moins de manière infime et en y étant bloqué en rotation.

4. Machine électrique (1) selon l'une des revendications 1 à 3,
**caractérisée**
**en ce que** l'agencement de roulements à billes (21, 22) comprend deux roulements à billes à gorges profondes serrés l'un contre l'autre au moyen d'une rondelle de compensation (26) du type rondelle ondulée.

5. Machine électrique (1) selon la revendication 4,
**caractérisée**
**en ce que** l'unité de palier (14) comprend une rondelle d'ajustement (33) agencée entre les bagues intérieures (21b, 22b) des roulements à billes à gorge profonde (21, 22).

6. Machine électrique (1) selon l'une des revendications 1 à 5,
**caractérisée**
**en ce que** l'unité de palier (14) comprend un anneau d'arrêt extérieur (27) pour la fixation axiale de la bague extérieure de roulement voisine (22a), de l'agencement de roulements à billes (21, 22).

7. Machine électrique (1) selon la revendication 6,
**caractérisée**
**en ce que** l'anneau d'arrêt extérieur (27) est logé, avec sa bordure extérieure d'anneau (28), dans une rainure annulaire (29) prévue sur le côté intérieur dans le fourreau (23).

8. Groupe d'entraînement (3) comprenant une machine électrique (1) selon l'une des revendications 1 à 7 en tant que machine motrice, et comprenant une machine de travail (2), notamment une pompe possédant son propre montage de paliers, de préférence une pompe hydraulique.
